# EUROPÄISCHE PATENTSCHRIFT

(11) **EP 2 437 345 B1**
(45) Veröffentlichungstag und Bekanntmachung des Hinweises auf die Patenterteilung: **28.09.2016**
(21) Anmeldenummer: 10181661.9
(22) Anmeldetag: 29.09.2010
(51) Int. Cl.: H01M 10/46, H01M 10/0525

(54) **Batteriepack für Elektrofahrzeuge**
Battery pack for electric vehicles
Batterie pour véhicules électriques

(43) Veröffentlichungstag der Anmeldung: 04.04.2012
(73) Patentinhaber: IPS Integrated Power Solutions AG, 2562 Port b. Biel (CH)
(72) Erfinder: Christ, Markus, 2505 Biel (CH); Vezzini, Andrea Dr., 3274 Merzligen (CH)
(74) Vertreter: Cohausz & Florack

(56) Entgegenhaltungen:
- DE-U1- 8 209 821
- US-A1- 2008 241 689
- US-B1- 6 411 063

## Beschreibung

Die vorliegende Erfindung betrifft ein Batteriepack für Elektrofahrzeuge, insbesondere Flurförderzeuge.

Elektrochemische Batteriezellen, wie beispielsweise Lithium-Ionen Batteriezellen, werden häufig bei mobilen elektrischen Verbrauchern eingesetzt, wobei in einem Batteriepack eine Vielzahl von Batteriezellen angeordnet sein können.

Es ist bekannt, dass die Lebensdauer von Lithium-Ionen Batteriezellen leidet, wenn die Lithium-Ionen Batteriezellen während des Betriebs außergewöhnlichen Bedingungen, wie beispielsweise einer hohen Temperatur, ausgesetzt sind. Eine Überwachung bzw. Steuerung der Lithium-Ionen Batteriezellen ist daher insbesondere während des Betriebs notwendig.

Die US Patentanmeldung US 2008/0241689 A1 beschreibt ein Batteriemodul mit einem zur Aufnahme einer Vielzahl von Batteriezellen geeignetem Gehäuse, wobei das Batteriemodul eine als gedruckte Leiterplatte ausgebildete Batteriemanagementeinrichtung umfasst. Die Batteriemanagementeinrichtung ist an der kurzen Seite des Gehäuses angebracht. Des weiteren ist ein Deckel vorgesehen, welcher die obere Öffnung des Gehäuses verschließen kann.

Die US Patentschrift US 6,411,063 B1 offenbart ein Batteriepack für Elektrofahrzeuge, umfassend mindestens ein Batteriemodul mit jeweils einem zur Aufnahme einer Vielzahl von Batteriezellen geeigneten Gehäuse, wobei mindestens ein Batteriemodul jeweils eine Batteriemanagementeinrichtung umfasst, welche dazu eingerichtet ist, eine Vielzahl von Batteriezellen in zumindest einem Gehäuse anzusteuern und/oder zu überwachen.

Das deutsche Gebrauchsmuster DE 82 09 821 U1 offenbart ein Batteriemodul mit einem Deckel.

Die zuvor hergeleitete und aus dem Stand der Technik aufgezeigte Aufgabe wird gemäß einem Batteriepack für Elektrofahrzeuge, insbesondere Flurförderzeuge, gelöst. Das Batteriepack umfasst mindestens ein Batteriemodul mit jeweils einem zur Aufnahme einer Vielzahl von Batteriezellen geeignetem Gehäuse, wobei mindestens ein Batteriemodul des mindestens einen Batteriemoduls jeweils eine Batteriemanagementeinrichtung umfasst, welche dazu eingerichtet ist, eine Vielzahl von Batteriezellen in zumindest einem Gehäuse anzusteuern und/oder zu überwachen, wobei mindestens ein Batteriemodul einen Deckel umfasst, welcher dazu eingerichtet ist, das Gehäuse des jeweiligen Batteriemoduls zu verschließen, dadurch gekennzeichnet, dass eine der mindestens einen Batteriemanagementeinrichtung an bzw. in dem Deckel des jeweiligen Batteriemoduls derart angeordnet ist, dass die Batteriemanagementeinrichtung bei verschlossenem Deckel im Gehäuse des jeweiligen Batteriemoduls platziert ist und dass die Batteriemanagementeinrichtung aus dem Gehäuse herausgebracht wird, wenn der Deckel geöffnet wird.

Die Batteriezellen können elektrochemische Batteriezellen darstellen, wie beispielsweise eine Akkumulatorbatteriezelle und insbesondere eine Lithium-Ionen Akkumulatorbatteriezelle oder dergleichen.

Die Elektrofahrzeuge können beispielsweise Hybridkraftfahrzeuge, elektrisch betriebene Fahrzeuge wie z.B. Flurförderzeuge, elektrische Fahrräder, elektrische Rollstühle oder dergleichen darstellen.

Für die Steuer- und/oder Überwachungsfunktion kann die Batteriemanagementeinrichtung mit jeweiligen Batteriezellen verbunden werden, beispielsweise über Kabel. Die Überwachungsfunktionen können beispielsweise eine Spannungsmessung, eine Strommessung, und/oder eine Temperaturmessung umfassen.

Das Gehäuse eines Batteriemoduls kann beispielsweise ein Batterietrog zur Aufnahme von Batteriezellen sein. Umfasst das Batteriepack mehr als ein Batteriemodul, so können die Gehäuse der mindestens zwei Batteriemodule miteinander mechanisch verbindbar sein, so dass die mindestens zwei Batteriemodule ein zusammenhängendes Batteriepack ergeben, wenn die Gehäuse miteinander mechanisch verbunden sind.

Die Batteriemanagementeinrichtung ist dazu eingerichtet, eine Vielzahl von Batteriezellen in zumindest einem Gehäuse anzusteuern bzw. zu überwachen. Dieses eine Gehäuse kann ein Gehäuse eines Batteriemoduls sein, welches eine Batteriemanagementeinrichtung umfasst. Es können jedoch beispielsweise auch Batteriezellen, welche in einem Gehäuse mindestens eines weiteren Batteriemoduls angeordnet sind, von der einen Batteriemanagementeinrichtung angesteuert und/oder überwacht werden. Das Batteriepack kann neben dieser Batteriemanagementeinrichtung auch weitere Batteriemanagementeinrichtungen umfassen, wobei jeweils eine Batteriemanagementeinrichtung einem Batteriemodul zugeordnet ist, wobei für jede weitere Batteriemanagementeinrichtung die zuvor getroffenen Erläuterungen bezüglich der einen Batteriemanagementeinrichtung gelten.

Beispielsweise kann mindestens eine der Batteriezellen jeweils ein Sensor zur Messung von Spannung bzw. Strom und/oder zur Messung der Temperatur zugeordnet sein. Die Steuerfunktion kann beispielsweise die Steuerung eines Ladevorgangs von Batteriezellen umfassen und/oder die Steuerung von Batteriezellen bei Stromabgabe an einen Verbraucher umfassen. Beispielsweise können auf Grundlage der durch die Überwachung ermittelten Daten einzelne Batteriezellen gezielt gesteuert werden, z.B. durch einen Zellenausgleich.

Beispielsweise kann eine Batteriemanagementeinrichtung jede einzelne Batteriezelle der Vielzahl von Batteriezellen, welche dieser Batteriemanagementeinrichtung zugeordnet sind, überwachen und/oder ansteuern. Eine Batteriemanagementeinrichtung kann jedoch auch einzelne Cluster von Batteriezellen, die jeweils mindestens zwei Batteriezellen von der derjenigen Batteriemanagementeinrichtung zugeordneten Vielzahl von Batteriezellen umfassen, jeweils überwachen bzw. steuern.

Somit kann das Batteriepack umfassend das mindestens eine Batteriemodul und die mindestens eine Batteriemanagementeinrichtung beispielsweise als eine Einheit in ein Elektrofahrzeug eingesetzt werden und anschließend beim Betrieb des Elektrofahrzeug eine Steuerung bzw. Überwachung der Batteriezellen des Batteriepacks gewährleisten, ohne dass am Elektrofahrzeug Änderungen vorgenommen werden müssen. Beispielsweise kann das Batteriepack auch direkt im Elektrofahrzeug effizient geladen werden, da das im Batteriepack integrierte Batteriemanagementsystem die Ladung überwachen und optimieren kann.

Des weiteren kann das Batteriepack beispielsweise als Austausch für ein bestehendes Batteriepack für Bleiakkumulatoren vorgesehen sein. Somit kann ein Elektrofahrzeug, welches bisher mit einem Batteriepack für Bleiakkumulatoren ausgerüstet war, sehr einfach mit dem beschriebenen Batteriepack betrieben werden, da die mindestens eine Batteriemanagementeinrichtung des beschriebenen Batteriepacks für eine Überwachung und/oder Steuerung der Batteriezellen, welche Lithium-Ionen Batteriezellen oder andere im Betrieb eher kritische Batteriezellen darstellen, sorgen kann.

Eine Batteriemanagementeinrichtung kann beispielsweise in dem Gehäuse oder außen an dem Gehäuse des jeweiligen Batteriemoduls angeordnet sein. Die Batteriemanagementeinrichtung kann fest installiert sein, sie kann jedoch von dem Gehäuse entfernbar installiert sein, beispielsweise für Wartungs- und/oder Reparaturzwecke.

Beispielsweise kann in dem Gehäuse eines Batteriemoduls eine Vielzahl von Batteriezellen derart angeordnet sein, dass der komplette Boden des Gehäuses mit Batteriezellen bedeckt ist, es können jedoch auch weniger Batteriezellen in dem Gehäuse angeordnet sein.

Die Ausgestaltung des Batteriepacks sieht vor, dass ein Batteriemodul des mindestens einen Batteriemoduls derart ausgestaltet ist, dass in zumindest einem Zustand des Batteriemoduls die Batteriemanagementeinrichtung im Gehäuse des Batteriemoduls platziert ist.

Somit ist in diesem Zustand des Batteriemoduls, welcher im folgenden als erster Zustand bezeichnet wird, in welchem die Batteriemanagementeinrichtung im Gehäuse des Batteriemoduls platziert ist, ein besonders guter Schutz der Batteriemanagementeinrichtung vor äußeren Einflüssen gewährleistet. Das Batteriemodul ist derart ausgestaltet, dass in einem zweiten Zustand des Batteriemoduls die Batteriemanagementeinrichtung aus dem Gehäuse des Batteriemoduls entfernbar ist. Beispielsweise kann die Batteriemanagementeinrichtung Transportmittel aufweisen, mit welchen sich die Batteriemanagementeinrichtung aus dem Gehäuse herausbewegen lässt, so dass ich anschließend das Batteriemodul im zweiten Zustand befindet, während sich das Batteriemodul im ersten Zustand befindet, wenn die Transportmittel die Batteriemanagementeinrichtung in das Gehäuse bewegt hat. Beispielsweise können die Transportmittel Klapp- bzw. Schwenkmittel, Schiebemittel oder andere geeignete Mittel darstellen.

Somit kann im ersten Zustand ein guter Schutz der Batteriemanagementeinrichtung gewährleistet werden, während im zweiten Zustand eine gute Zugänglichkeit der Batteriemanagementeinrichtung erzielt wird.

Die Ausgestaltung des Batteriepacks sieht vor, dass mindestens ein Batteriemodul einen Deckel umfasst, welcher dazu eingerichtet ist, das Gehäuse des jeweiligen Batteriemoduls zu verschließen.

Somit kann ein guter Schutz der Batteriezellen in dem jeweiligen Gehäuse erzielt werden, und beispielsweise kann auch ein weiterer Schutz der Batteriemanagementeinrichtung, wenn diese im Gehäuse angeordnet ist.

Des weiteren können Verschlussmittel vorgesehen sein, wie z.B. Mittel zum Einrasten, zum Festschrauben oder sonstige ähnliche geeignete Verschlussmittel, so dass der Deckel fest auf dem Gehäuse verschlossen werden kann.

Eine Ausgestaltung des Batteriepacks sieht vor, dass mindestens einer der Deckel über Klappmittel mit dem jeweiligen Gehäuse verbunden ist.

Die Klappmittel können beispielsweise durch einen oder durch mehrere Scharniere ausgebildet sein, aber auch durch andere geeignete Klappvorrichtungen. Es können auch geeignete Schwenkeinrichtungen für die Klappmittel verwendet werden.

Die Ausgestaltung des Batteriepacks sieht vor, dass eine der mindestens einen Batteriemanagementeinrichtung an bzw. in dem Deckel des jeweiligen Batteriemoduls derart angeordnet ist, dass die Batteriemanagementeinrichtung bei verschlossenem Deckel im Gehäuse des jeweiligen Batteriemoduls platziert ist.

Befindet sich der Deckel in der Verschlussposition auf dem jeweiligen Gehäuse, so wird hierbei automatisch die Batteriemanagementeinrichtung, welche an bzw. in diesem Deckel angeordnet ist, in das Gehäuse des Batteriemoduls platziert. Somit befindet sich dann das Batteriemodul in dem ersten Zustand, in welchem die Batteriemanagementeinrichtung in dem Gehäuse des Batteriemoduls angeordnet ist, wohingegen sich das Batteriemodul in dem zweiten Zustand befindet, wenn der Deckel geöffnet wird und die Batteriemanagementeinrichtung aus den Gehäuse hinausgebracht wird.

Beispielsweise kann die Batteriemanagementeinrichtung im Deckel integriert sein, so dass der Deckel zusammen mit dem Gehäuse ein Gesamtgehäuse des Batteriemoduls bildet, in welchem die Batteriemanagementeinrichtung platziert ist, wenn der Deckel das Gehäuse des Batteriemoduls verschließt, oder die Batteriemanagementeinheit kann an der Unterseite des Deckels angeordnet sein.

Der Deckel kann beispielsweise ganz vom Gehäuse abnehmbar sein, oder aber an einer Seite über z.B. Klappmittel mit dem Gehäuse befestigt sein.

Eine Ausgestaltung des Batteriepacks sieht vor, dass eine Ladezustandsanzeige in bzw. an einem Deckel eines Gehäuses des mindestens einen Batteriemoduls angeordnet ist.

Diese Ladezustandsanzeige ist beispielsweise an die Batteriemanagementeinrichtung gekoppelt, welche diesem Deckel zugeordnet ist, wobei die Batteriemanagementeinrichtung derart eingerichtet ist, dass die Ladezustandsanzeige den jeweiligen Ladezustand der Vielzahl von Batteriezellen, die dem jeweiligen Deckel zugeordnet sind, anzeigt. Die einem Deckel zugeordneten Batteriezellen können die in dem dem Deckel zugeordneten Gehäuse platzierten Batteriezellen darstellen, aber auch zusätzlich noch Batteriezellen, welche in dem Gehäuse von mindestens einem weiteren Batteriemodul platziert sind. Beispielsweise kann die Batteriemanagementeinrichtung für die Steuerung und/oder Überwachung dieser dem Deckel zugeordneten Batterien zuständig sein, wobei diese Batteriemanagementeinrichtung auch noch mit mindestens einen weiteren Batteriemanagementeinrichtung, die in einem der weiteren Batteriemodule angeordnet ist, zusammenwirken kann.

Die Ladezustandsanzeige kann beispielsweise an der Unterseite des Deckels angebracht sein, oder auf der Oberseite des Deckels angebracht sein, oder in dem Deckel integriert sein.

Beispielsweise kann ein Batteriemodul oder ein Deckel eines Batteriemoduls auch eine akustische Warnvorrichtung aufweisen, welche von einer Batteriemanagementeinrichtung derart angesteuert wird, dass bei Unterschreiten eines vordefinierten Ladungszustands von der akustischen Warnvorrichtung ein akustisches Warnsignal ausgegeben wird.

Eine Ausgestaltung des Batteriepacks sieht vor, dass der Deckel mit der integrierten Ladezustandsanzeige ein nach außen liegendes Sichtfenster umfasst, welches die Ladezustandsanzeige abdeckt.

Somit kann die Ladezustandsanzeige besonders gut vor äußeren Einflüssen geschützt werden. Beispielsweise kann bei dieser Ausgestaltung die Ladezustandsanzeige im Deckel integriert sein. Das Sichtfenster kann beispielsweise verschließbar und zu öffnen sein, so dass die Ladezustandsanzeige bei Defekt ausgetauscht werden kann.

Eine Ausgestaltung des Batteriepacks sieht vor, dass ein Deckel eines Gehäuses des mindestens einen Batteriemoduls mindestens einen der folgenden Anschlüsse aufweist: Ladekabelanschluß, Verbraucherkabelanschluß, und Datenübertragungsanschluß.

An den Verbraucherkabelanschluss kann beispielsweise ein Verbraucherkabel angesteckt bzw. angeschlossen werden, wobei der Verbraucherkabelanschluss mit den dem Deckel zugeordneten Batteriezellen verbunden werden kann, so dass diese Batteriezellen über den Verbraucherkabelanschluss einen Strom an einen Verbraucher, wie beispielsweise ein Flurförderzeug, abgeben können.

An den Ladekabelanschluss kann beispielsweise ein Ladekabel angesteckt bzw. angeschlossen werden, so dass die dem Deckel zugeordneten Batteriezellen geladen werden können.

Der Datenübertragungsanschluss kann beispielsweise mit der Batteriemanagementeinrichtung verbunden sein, wobei die Batteriemanagementeinrichtung beispielsweise ein externes Ladegerät über den Datenübertragungsanschluss derart ansteuern kann, dass ein Ladevorgang, welcher über den Ladekabelanschluss zum Laden der dem Deckel zugeordneten Batteriezellen eingespeist wird, optimiert wird. Der Datenübertragungsanschluss kann aber auch zur Übertragung von anderen Daten aus der Batteriemanagementeinheit, wie beispielsweise Zustandsdaten von Batteriezellen und/oder einer abgespeicherten, historischen Daten über die Batteriezellen umfassen. Des weiteren können über den Datenübertragungsanschluss Daten auf die Batteriemanagementeinheit geladen werden.

Der Datenübertragungsanschluss kann auch als Funkmodul ausgebildet sein, so dass die Datenübertragung über Funk erfolgt.

Eine Ausgestaltung des Batteriepacks sieht vor, dass ein Ladegerät auf einem Deckel eines Gehäuses des mindestens einen Batteriemoduls angeordnet ist

Das auf dem Deckel angeordnete Ladegerät kann beispielsweise über ein Kabel mit einer Steckdose oder einer sonstigen Energieversorgungseinrichtung gekoppelt werden kann, so dass die dem Deckel zugeordneten Batteriezellen in dem jeweiligen Batteriemodul oder den Batteriemodulen über dieses auf dem Deckel angeordneten Ladegerät geladen werden können. Das Ladegerät kann hierzu wiederum mit der Batteriemanagementeinrichtung verbunden sein, so dass diese Batteriemanagementeinrichtung das Ladegerät zur Optimierung des Ladevorgangs ansteuern kann.

Eine Ausgestaltung des Batteriepacks sieht vor, dass ein Gehäuse zumindest eines Batteriemoduls derart ausgebildet ist, dass ein Gehäuse eines weiteren Batteriemoduls auf dem Gehäuse des zumindest einen Batteriemoduls stapelbar ist.

Hierzu kann ein erstes Batteriemodul beispielsweise Aufnahmevorrichtungen zur Aufnahme des Gehäuses des weiteren Batteriemoduls aufweisen, welches auf dem ersten Batteriemodul gestapelt werden soll. Somit können mehrere Batteriemodule übereinander angeordnet werden. Beispielsweise kann das oberste dieser übereinander angeordneten Batteriemodule eines der zuvor erläuterten Batteriemodule, welches einen Deckel umfasst, darstellen. So kann die Batteriemanagementeinrichtung an dem Deckel angeordnet sein, wie zuvor erläutert, wobei diese Batteriemanagementeinrichtung dazu eingerichtet sein kann, Batteriezellen in dem Gehäuse des oben liegenden Batteriemoduls zu überwachen bzw. zu steuern, aber auch beispielsweise Batteriezellen in den darunter liegenden Batteriemodulen, wie beispielsweise dem Batteriemodul anzusteuern, zu überwachen. Hierzu kann eine Verkabelung vom Batteriemanagementgerät zu den Batteriezellen in den jeweiligen Gehäusen der jeweiligen Batteriemodule angebracht werden.

Eine Ausgestaltung des Batteriepacks sieht vor, dass das Batteriepack zumindest zwei Batteriemodule umfasst, und dass die Gehäuse von zumindest zwei Batteriemodulen derart ausgebildet sind, dass diese Gehäuse nebeneinander angeordnet werden können.

Hierzu können beispielsweise Befestigungsmittel verwendet werden, die zwei nebeneinander angeordnete Batteriemodule und miteinander befestigt. Beispielsweise können diese Befestigungsmittel an den jeweiligen Gehäusen der nebeneinander zu platzierenden Batteriemodulen fest angeordnet bzw. in diesen Gehäusen integriert sein. Die Befestigungsmittel können jedoch auch externe Befestigungsmittel darstellen, die zur Befestigung der Gehäuse der jeweiligen Batteriemodule an diese Gehäuse angebracht werden können.

Somit können, je nach Bedarf, mehrere Batteriemodule zu einem Batteriepack vereinigt werden, so dass entsprechend einer Anforderung, z.B. eines Flurförderzeuges, eine entsprechende Batterieanordnung in dem Batteriepack gewährleistet werden kann. Es können beispielsweise mehrere Batteriemodule übereinander gestapelt und/oder nebeneinander angeordnet und miteinander befestigt sein.

Eine Ausgestaltung des Batteriepacks sieht vor, dass in dem Gehäuse zumindest eines Batteriemoduls jeweils mindestens eine Lage von nebeneinander platzierten Batteriezellen angeordnet ist.

Eine Lage von nebeneinander platzierten Batteriezellen kann das Gehäuse im Bodenbereich vollständig ausfüllen, die Lage kann jedoch auch nur so viele Batteriezellen umfassen, dass das Gehäuse im Bodenbereich zumindest teilweise frei bleibt.

Mindestens eine Batteriezelle kann im Gehäuse senkrecht angeordnet sein, d.h. die Batteriepole bzw. Batteriekontakte dieser mindestens einen Batteriezelle zeigen nach oben. Beispielsweise kann mindestens eine Lage von nebeneinander platzierten Batteriezellen senkrecht angeordnete Batteriezellen umfassen.

Mindestens eine Batteriezelle kann im Gehäuse auf ihrer Seite liegend angeordnet sein, d.h. die Batteriepole bzw. Batteriekontakte dieser mindestens einen Batteriezelle zeigen zu einer Seite hin und nicht nach oben. Beispielsweise kann mindestens eine Lage von nebeneinander platzierten Batteriezellen seitlich angeordnete Batteriezellen umfassen.

Eine Ausgestaltung des Batteriepacks sieht vor, dass jeweils eine isolierende Zwischenabdeckung auf mindestens einer Lage der mindestens einen Lage von nebeneinander platzierten Batteriezellen angeordnet ist.

Diese Zwischenabdeckung kann beispielsweise Löcher aufweisen, die derart angeordnet sind, dass darunter positionierte Batteriezellen z.B. durch jeweils einen Stecker kontaktiert werden können.

Eine Ausgestaltung des Batteriepacks sieht vor, dass die mindestens eine Lage von nebeneinander platzierten Batteriezellen mindestens zwei übereinander angeordnete Lagen von nebeneinander platzierten Batteriezellen darstellen.

Beispielsweise kann auf einer ersten Lage von nebeneinander platzierten Batteriezellen eine zweite Lage oder auch mehrere Lagen von nebeneinander platzierten Batteriezellen angeordnet sein. Auch diese zweite Lage oder diese weiteren Lagen können in ihrem Bereich jeweils das Gehäuse komplett ausfüllen oder auch Freiräume lassen. So können beispielsweise, wenn mindestens zwei Lagen von Batteriezellen übereinander angeordnet sind, jeweils zwei direkt angrenzende Lagen von nebeneinander platzierten Batteriezellen durch jeweils eine isolierende Zwischenabdeckung getrennt werden.

Die isolierende Zwischenabdeckung kann beispielsweise einrastbar oder befestigbar an dem Gehäuse angebracht werden. Die einzelnen Batteriezellen können jeweils miteinander verbunden werden der mehreren Lagen können miteinander verbunden sein.

Eine Ausgestaltung des Batteriepacks sieht vor, dass das Gehäuse zumindest eines Batteriemoduls eine innenliegende Isolation zur Isolierung des Gehäuses gegenüber den in dem Gehäuse angeordneten Batteriezellen umfasst.

Eine Ausgestaltung des Batteriepacks sieht vor, dass das Gehäuse zumindest eines Batteriemoduls zumindest zu den Seiten und nach unten in sich geschlossen und dicht ist.

Somit kann vermieden werden, dass Flüssigkeit aus dem Gehäuse herausläuft. Ferner kann auch Schutz vor z.B. explodierenden Batteriezellen gewährleistet werden. Das Gehäuse kann beispielsweise ein Batterietrog sein.

Eine Ausgestaltung des Batteriepacks sieht vor, dass das Gehäuse zumindest eines Batteriemoduls einen Schwingungsdämpfer umfasst, welcher dazu eingerichtet, in diesem Gehäuse angeordnete Batteriezellen vor Stößen zu schützen.

Darüberhinaus kann beispielsweise auch eine Batteriemanagementeinrichtung mit einem Schwingungsdämpfer an einem Gehäuse eines Batteriemoduls oder an einem Deckel eines Batteriemoduls befestigt bzw. befestigbar sein.

Die Erfindung wird im Folgenden anhand von Ausführungsbeispiele zeigenden Zeichnungen näher erläutert.

Dabei zeigen:
- Fig. 1a:: Eine schematische Darstellung einer ersten beispielhaften Ausführungsform eines Batteriepacks in einer ersten Ansicht;
- Fig. 1b:: Eine schematische Darstellung einer ersten beispielhaften Ausführungsform eines Batteriepacks mit einem Batteriemodul in einer zweiten Ansicht;
- Fig. 1c:: Eine schematische Darstellung einer zweiten beispielhaften Ausführungsform eines Batteriepacks mit einem Batteriemodul;
- Fig. 1d:: Eine schematische Darstellung einer dritten beispielhaften Ausführungsform eines Batteriepacks;
- Fig. 1e:: Eine schematische Darstellung einer vierten beispielhaften Ausführungsform eines Batteriepacks;
- Fig. 1f:: Eine schematische Darstellung einer fünften beispielhaften Ausführungsform eines Batteriepacks;
- Fig. 2a:: Eine schematische Darstellung einer ersten beispielhaften Ausführungsform eines Deckels für ein Batteriemodul;
- Fig. 2b:: Eine schematische Darstellung einer zweiten beispielhaften Ausführungsform eines Deckels für ein Batteriemodul;
- Fig. 2c:: Eine schematische Darstellung einer dritten beispielhaften Ausführungsform eines Deckels für ein Batteriemodul;
- Fig. 2d:: Eine schematische Darstellung einer vierten beispielhaften Ausführungsform eines Deckels für ein Batteriemodul;
- Fig. 3a:: Eine schematische Querschnittsdarstellung einer sechsten beispielhaften Ausführungsform eines Batteriepacks;
- Fig. 3b:: Eine schematische Querschnittsdarstellung einer siebten beispielhaften Ausführungsform eines Batteriepacks;
- Fig. 4a:: Eine schematische Querschnittsdarstellung einer achten beispielhaften Ausführungsform eines Batteriepacks; und
- Fig. 4b:: Eine schematische Querschnittsdarstellung einer neunten beispielhaften Ausführungsform eines Batteriepacks.

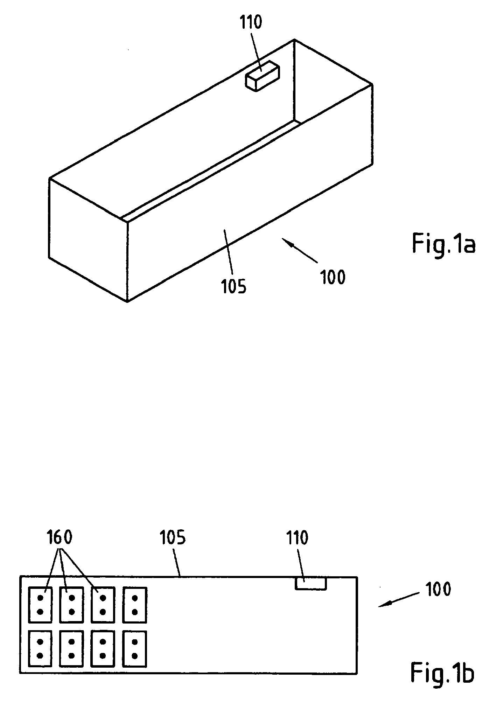

Fig. 1a stellt eine schematische Darstellung einer ersten beispielhaften Ausführungsform eines Batteriepacks für Elektrofahrzeuge, insbesondere Flurförderzeuge, in einer ersten Ansicht dar.

Das Batteriepack umfasst ein Batteriemodul 100 mit einem zur Aufnahme einer Vielzahl von Batteriezellen 160 (nicht in Fig. 1a dargestellt) geeignetem Gehäuse 105. Das Batteriemodul 100 umfasst eine Batteriemanagementeinrichtung 110, welche dazu eingerichtet ist, eine Vielzahl von Batteriezellen 160 in dem Gehäuse 105 anzusteuern und/oder zu überwachen.

Die Batteriezellen 160 können elektrochemische Batteriezellen darstellen, wie beispielsweise Akkumulatorbatteriezellen und insbesondere Lithium-Ionen Akkumulatorbatteriezellen oder dergleichen.

Für die Steuer- und/oder Überwachungsfunktion kann die Batteriemanagementeinrichtung 110 mit jeweiligen Batteriezellen 160, welche in dem Gehäuse 105 angeordnet werden können, verbunden werden, beispielsweise über Kabel. Die Überwachungsfunktionen können beispielsweise eine Spannungsmessung, eine Strommessung, und/oder eine Temperaturmessung umfassen. Beispielsweise kann die Batteriemanagementeinrichtung 110 dazu eingerichtet sein, jeweils einzelne Batteriezellen 160 der Vielzahl von Batteriezellen 160 anzusteuern und/oder zu überwachen. So kann beispielsweise kann mindestens einer der Batteriezellen 160 jeweils ein Sensor zur Messung von Spannung bzw. Strom und/oder zur Messung der Temperatur zugeordnet sein. Die Steuerfunktion kann beispielsweise die Steuerung eines Ladevorgangs von Batteriezellen 160 umfassen und/oder die Steuerung von Batteriezellen 160 bei Stromabgabe an einen Verbraucher umfassen. Beispielsweise können auf Grundlage der durch die Überwachung ermittelten Daten einzelne Batteriezellen 160 gezielt gesteuert werden, z.B. durch einen Zellenausgleich.

In der in Fig. 1a dargestellten beispielhaften ersten Ausführungsform ist die Batteriemanagementeinrichtung 110 an einer Innenseite des Gehäuses 105 platziert, d.h. Fig. 1a zeigt das Batteriemodul 100 in einem Zustand, in welchen die Batteriemanagementeinrichtung 110 im Gehäuse 105 des Batteriemoduls 100 platziert ist. In diesem Zustand ist die Batteriemanagementeinrichtung 110 besonders sicher vor von außen wirkenden Einflüssen geschützt.

Die Batteriemanagementeinrichtung 110 kann fest im Gehäuse 105 installiert sein, sie kann jedoch auch aus dem Gehäuse 105 entfernbar installiert sein, beispielsweise für Wartungs- und/oder Reparaturzwecke.

Das Gehäuse 105 kann so ausgebildet sein, dass es zumindest an der Unterseite und an den Seitenwänden dicht ist. Es kann auch (nicht in Fig. 1a dargestellt) auf der Oberseite dicht verschlossen sein bzw. dicht verschließbar sein, beispielsweise durch einen Deckel oder andere geeignete Verschlussmittel.

Fig. 1b stellt eine schematische Darstellung der ersten beispielhaften Ausführungsform eines Batteriepacks für Elektrofahrzeuge, insbesondere Fuhrförderzeuge, in einer zweiten Ansicht dar.

In dieser zweiten Ansicht sind beispielhaft eine Vielzahl von Batteriezellen 160 in dem Gehäuse 105 des Batteriemoduls 100 platziert. Beispielsweise können eine Vielzahl von Batteriezellen 160 derart im Gehäuse 105 angeordnet sein, dass der komplette Boden des Gehäuses 105 Batteriezellen bedeckt ist, es können jedoch auch weniger Batteriezellen im Gehäuse 105 angeordnet sein, wie beispielhaft in Fig. 1b dargestellt

Die Batteriezellen 160 können, wie beispielhaft in Fig. 1b dargestellt, aufrecht in dem Gehäuse 105 angeordnet sein, d.h. die Batteriepole 161 bzw. Stromkontakte zeigen bei dieser beispielhaften Anordnung nach oben. Die Batteriezellen 160 können jedoch auch anders angeordnet sein, beispielsweise auf einer Seite liegend, wobei die Batteriepole 161 bzw. die Stromkontakte zu einer Seite zeigen.

Die Batteriemanagementeinrichtung 110 kann mit mindestens einer der Vielzahl von Batteriezellen 160 verbunden sein. Beispielsweise kann somit jede einzelne Batteriezelle 160 der Vielzahl von Batteriezellen 160 überwacht werden, z.B. durch Auslesen von Sensorwerten der jeweiligen Batteriezelle 160, oder aber es kann auch jede einzelne der Batteriezellen 160 gezielt angesteuert werden, z.B. während eines Ladevorgangs oder aber während Abgabe von Strom an einen Verbraucher. Diese Steuerung kann in Abhängigkeit der erfassten Sensorwerte der jeweiligen Batteriezellen 160 erfolgen. Die Batteriemanagementeinrichtung 110 kann jedoch auch einzelne Cluster von Batteriezellen 160, die jeweils mindestens zwei Batteriezellen 160 von der Vielzahl von Batteriezellen 160 umfassen, jeweils überwachen bzw. steuern. Die jeweilige Verkabelung hierzu ist in Fig. 1b nicht dargestellt.

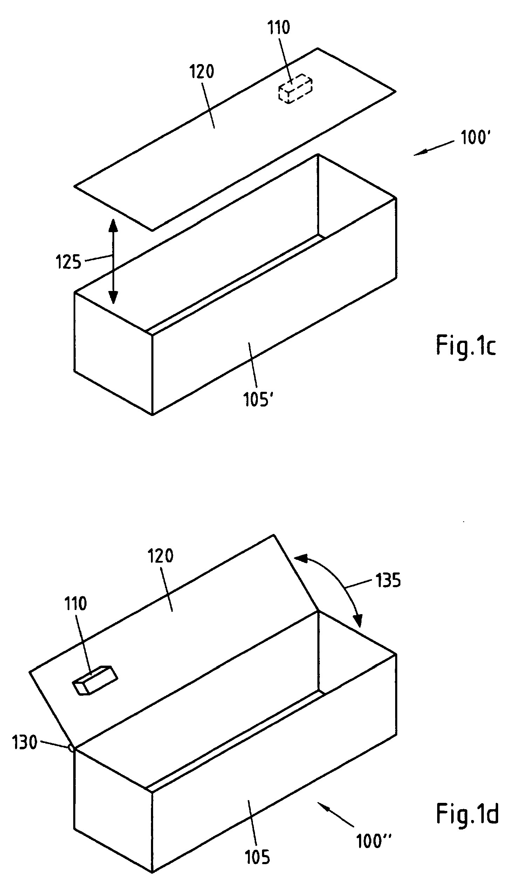

Fig. 1c zeigt eine schematische Darstellung einer zweiten beispielhaften Ausführungsform eines Batteriepacks mit einem Batteriemodul 100'. Das Batteriemodul 100' umfasst einen Deckel 120, welcher dazu eingerichtet ist, das Gehäuse 105' des jeweiligen Batteriemoduls 100' zu verschließen.

In Fig. 1c ist das Batteriemodul 100' in geöffnetem Zustand dargestellt. Wie durch Bezugszeichen 125 angedeutet, kann der Deckel 120 in eine weitere Position zum Verschließen des Gehäuses 105' gebracht werden. Beispielsweise können hierzu Verschlussmittel vorgesehen sein, wie z.B. Mittel zum Einrasten, zum Festschrauben oder sonstige ähnliche geeignete Verschlussmittel, so dass der Deckel 120 fest auf dem Gehäuse 105' angebracht werden kann. Wie in Fig. 1c dargestellt, kann die Batteriemanagementeinrichtung 110 an den Deckel des jeweiligen Batteriemoduls 100' derart angeordnet sein, dass die Batteriemanagementeinrichtung 110 bei verschlossenem Deckel 120 im Gehäuse 105' des jeweiligen Batteriemoduls 100' platziert ist. Beispielsweise kann die Batteriemanagementeinrichtung 110 im Deckel 120 integriert sein, so dass der Deckel 120 zusammen mit dem Gehäuse 105' ein Gesamtgehäuse des Batteriemoduls bildet, in welchem die Batteriemanagementeinrichtung platziert ist, wenn der Deckel 120 das Gehäuse 105' des Batteriemoduls 100'verschließt, oder die Batteriemanagementeinheit 110 kann an der Unterseite des Deckels 120 angeordnet sein. Durch die Anordnung der Batteriemanagementeinrichtung 110 an dem Deckel 120 des Batteriemoduls 100' kann erreicht werden, dass sich die Batteriemanagementeinrichtung 110 zusammen mit dem Deckel 120 leicht vom Gehäuse 105' des Batteriemoduls 100' entfernen lässt, z.B. aus Gründen der Wartung oder zur Reparatur.

Fig. 1d zeigt eine schematische Darstellung einer dritten beispielhaften Ausführungsform eines Batteriepacks mit einem Batteriemodul 100", welche auf der in Fig. 1c gezeigten zweiten beispielhaften Ausführungsform eines Batteriepacks mit einem Batteriemodul 100' basiert.

Der Deckel 120 ist hierbei durch Klappmittel 130 mit dem Gehäuse 100" verbunden, so dass der Deckel in einem geöffnetem Zustand, wie in Fig. 1d gezeigt, weggeklappt werden kann und die Batteriemanagementeinrichtung 110, die an dem Deckel 120 angeordnet ist, freiliegt. Wie in Fig. 1d durch das Bezugszeichen 135 angedeutet, kann der geöffnete Deckel 120 zugeschwenkt werden, so dass bei verschlossenem Deckel 120 die Batteriemanagementeinrichtung 110 in dem Gehäuse des Batteriemoduls 100" platziert ist Somit befindet sich das Batteriemodul 100' in Fig. 1d in einem ersten Zustand, in welchem die Batteriemanagementeinrichtung 110 in dem Gehäuse 105" des Batteriemoduls 100" angeordnet ist, wohingegen sich das Batteriemodul 100' in Fig. 1c in einem zweiten Zustand befindet, in welchem die Batteriemanagementeinrichtung 110 außerhalb des Gehäuses des Batteriemoduls 100" angeordnet ist.

Die Klappmittel 130 können beispielsweise durch einen oder durch mehrere Scharniere ausgebildet sein, aber auch durch andere geeignete Klappvorrichtungen. Es können auch geeignete Schwenkeinrichtungen für die Klappmittel 130 verwendet werden.

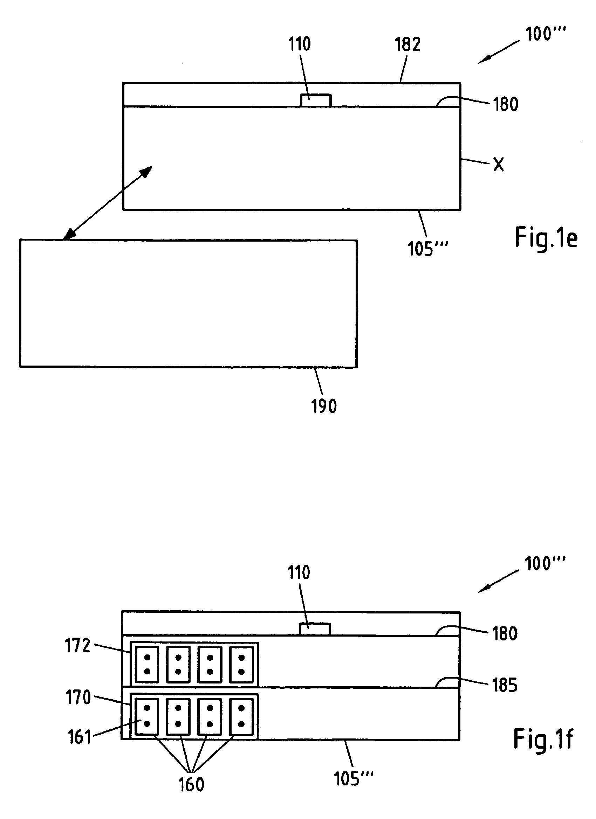

Fig. 1e zeigt eine schematische Darstellung einer vierten beispielhaften Ausführungsform eines Batteriepacks mit einem Batteriemodul 100"', welche auf jeder der zuvor erläuterten beispielhaften Ausführungsform eines Batteriepacks mit einem Batteriemodul basieren kann, wobei sich diese vierte beispielhafte Ausführungsform von der ersten bis dritten beispielhaften Ausführungsform darin unterscheidet, dass das Gehäuse 105'" eine Zwischenwand 180 umfasst, welche das Innere des Gehäuses 105' in einen unteren Bereich 181 und einen oberen Bereich 182 einteilt. Auf dieser Zwischenwand 180 kann die Batteriemanagementeinrichtung 110 befestigt sein, während mindestens eine Batteriezelle der Vielzahl von Batteriezellen 160 im unteren Bereich angeordnet sein kann. Beispielsweise kann diese Zwischenwand 180 nach oben herausnehmbar sein, so dass sich die Batteriezellen 160 nach Herausnehmen der Zwischenwand 180 im unteren Bereich 181 positionieren lassen.

Das Gehäuse 105"' kann ferner, wie beispielhaft in Fig. 1e dargestellt, eine an einer Seite des Gehäuses befindliche Öffnung aufweisen. Über diese Öffnung lassen sich beispielsweise Batteriezellen 160 in den unteren Bereich 181 hineinplatzieren. Die Öffnung kann beispielsweise durch einen Deckel 190 verschließbar sein, das Gehäuse 105'" kann auch eine Klappe (nicht in Fig. 1e dargestellt) zum Verschließen der Öffnung aufweisen.

Die Zwischenwand 180 kann mindestens eine Öffnung aufweisen, so dass die Batteriemanagementeinrichtung 110 mit den im unteren Bereich 181 angeordneten Batteriezellen 160 verbunden werden kann.

Fig. 1f zeigt eine schematische Darstellung einer fünften beispielhaften Ausführungsform eines Batteriepacks mit einem Batteriemodul 100"', welche auf der zuvor erläuterten beispielhaften vierten Ausführungsform eines Batteriepacks mit einem Batteriemodul 100"' basiert.

Die Batteriezellen 160 sind in dieser fünften beispielhaften Anordnung jeweils auf einer Seite liegend angeordnet, d.h. die Batteriepole 161 bzw. die Stromkontakte der Batteriezellen 160 zeigen nicht nach oben, sondern jeweils zu einer Seite. Das in Fig. 1f dargestellte Gehäuse 105"' kann beispielsweise über die Öffnung (der Deckel 190 oder die Klappe dieser Öffnung ist nicht in Fig. 1f dargestellt) seitlich mit den Batteriezellen 160 befüllt werden, wobei beispielsweise alle Batteriezellen 160 derart auf der Seite liegend platziert werden, dass die die Batteriepole 161 bzw. die Stromkontakte der Batteriezellen 160 zur Öffnung hin zeigen. Somit sind die Batteriepole 161 bzw. die Stromkontakte der Batteriezellen durch die Öffnung gut erreichbar, so dass die Batteriezellen 160 elektrisch miteinander verbunden werden können. Die Gehäuse

In dem Gehäuse 100"' kann beispielsweise eine erste Lage 170 von nebeneinander platzierten Batteriezellen 160 angeordnet sein. Diese erste Lage 170 kann das Gehäuse 100"' im Bodenbereich vollständig ausfüllen, die Lage 170 kann jedoch auch nur so viele Batteriezellen 160 umfassen, dass das Gehäuse im Bodenbereich zumindest teilweise frei bleibt, wie beispielsweise in Fig. 1b dargestellt. Auf der ersten Lage 170 von Batteriezellen 160 kann eine isolierende Zwischenabdeckung 185 angeordnet sein. Diese Zwischenabdeckung 185 kann beispielsweise Löcher aufweisen, die derart angeordnet sind, dass darunter positionierte Batteriezellen 160 z.B. durch jeweils einen Stecker kontaktiert werden können.

Desweiteren kann auf der ersten Lage 170 von nebeneinander platzierten Batteriezellen 160 eine Lage 171 oder auch mehrere Lagen von nebeneinander platzierten Batteriezellen angeordnet sein. Auch diese eine Lage 171 oder diese weiteren Lagen können in ihrem Bereich jeweils das Gehäuse komplett ausfüllen oder auch Freiräume lassen. So kann beispielsweise, wenn mindestens zwei Lagen von Batteriezellen übereinander angeordnet sind, jeweils zwei direkt angrenzende Lagen 170, 171 von nebeneinander platzierten Batteriezellen durch jeweils eine isolierende Zwischenabdeckung 185 getrennt werden. Die isolierende Zwischenabdeckung 185 kann beispielsweise einrastbar oder befestigbar an dem Gehäuse 100'" angebracht werden. Die einzelnen Batteriezellen 160 können jeweils miteinander verbunden werden, und die Batteriemanagementeinrichtung 110 kann auch, wie zuvor beschrieben, mit den jeweiligen Batteriezellen 160 verbunden sein, um die zuvor beschriebenen Funktionen durchführen zu können.

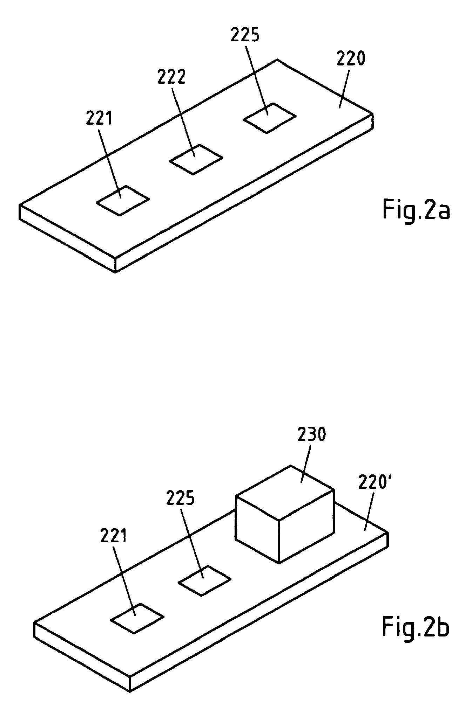

Fig. 2a zeigt eine schematische Darstellung einer ersten beispielhaften Ausführungsform eines Deckels 220 für ein Batteriemodul. Dieser Deckel kann beispielsweise für die in der Fig. 1c oder die in der Fig. 1d dargestellten beispielhaften zweiten oder dritten Ausführungsform eines Batteriepacks mit einem Batteriemodul 100' bzw. 100" verwendet werden. Dieser Deckel 220 kann ferner auch für die in den Figuren 1e und 1f dargestellten beispielhaften vierten oder fünften Ausführungsform eines Batteriepacks mit einem Batteriemodul 100"' verwendet werden, wobei die Batteriemanagementeinrichtung 110 entweder auf der Zwischenwand 180 angeordnet ist, oder aber im Deckel integriert bzw. am Deckel befestigt sein kann.

Der Deckel 220 weist einen Verbraucherkabelanschluss 221 auf, an welchem ein Verbraucherkabel angesteckt werden kann, und welcher mit den in dem Gehäuse oder den jeweiligen Gehäusen von mehreren Batteriemodulen liegenden Batteriezellen 160 verbunden werden kann, so dass die in dem oder den Batteriemodulen angeordneten Batteriezellen 160 über den Verbraucherkabelanschluss 221 einen Strom an einen Verbraucher, wie beispielsweise ein Flurförderzeug, abgeben können. Diese Batteriezellen 160 können als die dem Deckel 220 zugeordneten Batteriezellen 160 bezeichnet werden.

Ferner kann der Deckel 220 einen Ladekabelanschluss 222 aufweisen, an welchem ein Ladekabel angesteckt oder angeschlossen werden kann, so dass die dem Deckel 220 zugeordneten Batteriezellen 160 geladen werden können.

Des weiteren kann der Deckel 220 einen Datenübertragungsanschluss 225 aufweisen. Dieser Datenübertragungsanschluss kann beispielsweise mit der Batteriemanagementeinrichtung 160 verbunden sein, wobei die

Batteriemanagementeinrichtung 160 ein externes Ladegerät über den Datenübertragungsanschluss 225 derart ansteuern kann, dass ein Ladevorgang, welcher über den Ladekabelanschluss 222 zum Laden der dem Deckel 220 zugeordneten Batteriezellen eingespeist wird, optimiert wird. Der Datenübertragungsanschluss 225 kann aber auch zur Übertragung von anderen Daten aus der Batteriemanagementeinheit 110, wie beispielsweise Zustandsdaten von Batteriezellen 160 und/oder einer abgespeicherten, historischen Daten über die Batteriezellen 160 umfassen. Des weiteren können über den Datenübertragungsanschluss 225 Daten auf die Batteriemanagementeinheit 110 geladen werden. Der Datenübertragungsanschluss 225 kann auch als Funkmodul ausgebildet sein, so dass die Datenübertragung zu einem Ladegerät über Funk erfolgt.

Fig. 2b zeigt eine schematische Darstellung einer zweiten beispielhaften Ausführungsform eines Deckels 220' für ein Batteriemodul. Dieser Deckel 220' kann auch wiederum für jedes der in den Figuren 1c bis 1f dargestellten Batteriemodule 100' bzw. 100" bzw. 100'" verwendet werden.

Der Deckel 220' umfasst ein auf dem Deckel 220' angeordnetes Ladegerät 230, welches beispielsweise über ein Kabel mit einer Steckdose oder einer sonstigen Energieversorgungseinrichtung gekoppelt werden kann, so dass die dem Deckel 220' zugeordneten Batteriezellen 160 in dem jeweiligen Batteriemodul oder den Batteriemodulen über dieses auf dem Deckel 220' angeordneten Ladegerät 230 geladen werden können. Das Ladegerät 230 kann hierzu wiederum mit der Batteriemanagementeinrichtung 110 verbunden sein, sodass diese Batteriemanagementeinrichtung 110 das Ladegerät 230 zur Optimierung des Ladevorgangs ansteuert.

Jeder der in den Figuren 2a und 2b dargestellten Deckel 220 bzw. 220' kann eine integrierte Ladezustandsanzeige umfassen (nicht in den Fig. 2a und 2b dargestellt). Diese Ladezustandsanzeige ist an die Batteriemanagementeinrichtung 110 gekoppelt, wobei die Batteriemanagementeinrichtung derart eingerichtet ist, dass die Ladezustandsanzeige den jeweiligen Ladezustand der Vielzahl von Batteriezellen 160, die dem jeweiligen Deckel 220 bzw. 220' zugeordnet sind, anzeigt. Beispielsweise kann der Deckel 220 bzw. 220' auch ein nach außen, d.h. nach oben liegendes Sichtfenster umfassen, welches die Ladezustandsanzeige abdeckt. Somit ist die Ladezustandsanzeige besonders gut vor äußeren Einflüssen geschützt.

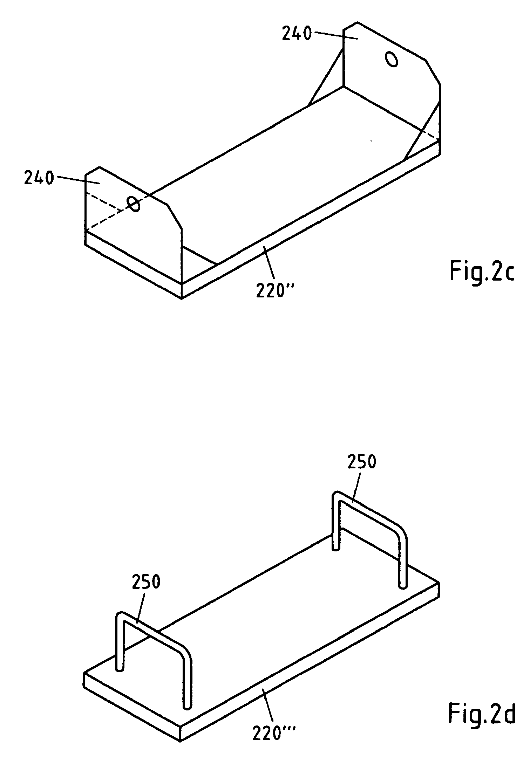

Fig. 2c zeigt eine schematische Darstellung einer dritten beispielhaften Ausführungsform eines Deckels 220" für ein Batteriemodul, wobei dieser Deckel 220" auf jedem der zuvor erläuterten Deckel basieren kann.

Der Deckel 220' beweist an der Oberseite mindestens eine Halteöse 240 auf, welche beispielsweise an ein Transportgeschirr abgebracht werden kann bzw. können, so dass das jeweilige Batteriemodul, welches mit dem Deckel 220" verschlossen ist, mit dieser bzw. diesen Hebeösen 240 angehoben und transportiert werden können, beispielsweise zum Wechseln eines Batteriemoduls in einem Flurförderzeug.

Fig. 2d zeigt eine schematische Darstellung einer sechsten beispielhaften Ausführungsform eines Deckels 200'" für ein Batteriemodul, wobei dieser Deckel 220'" auf jedem der zuvor genannten Deckel ausschließlich des Deckels 200" basieren kann.

Der Deckel 220"' weist mindestens einen Bügel 250 auf, der auf der Oberseite des Deckels 220'" angeordnet ist. Mit Hilfe dieses mindestens einen Bügel 250 kann der Deckel 220"' zusammen mit dem jeweiligen Gehäuse des Batteriemoduls transportiert werden, wenn der Deckel 220"' verschlossen ist.

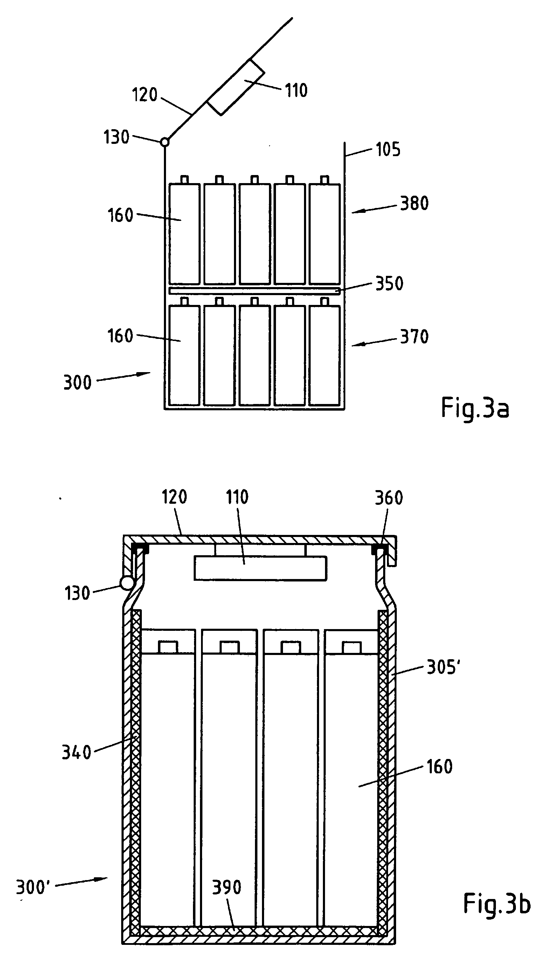

Fig. 3a zeigt eine schematische Querschnittsdarstellung einer sechsten beispielhaften Ausführungsform eines Batteriepacks.

Das Batteriepack umfasst ein Batteriemodul 300, welches auf jedem der zuvor erläuterten Batteriemodule basieren kann. In Fig. 3a wird beispielhaft und ohne Einschränkurigen auf das Batteriemodul 100" aus Fig. 1d Bezug genommen, welches den Deckel 120 umfasst, der über ein Klappmittel 130 mit dem jeweiligen Gehäuse 105 verbunden ist.

In dem Gehäuse 305' ist eine erste Lage 370 von nebeneinander platzierten Batteriezellen 160 angeordnet. Diese erste Lage 370 kann das Gehäuse 105 im Bodenbereich vollständig ausfüllen, die Lage 370 kann jedoch auch nur so viele Batteriezellen 160 umfassen, dass das Gehäuse im Bodenbereich zumindest teilweise frei bleibt, wie beispielsweise in Fig. 1b dargestellt. Auf der ersten Lage 370 von Batteriezellen 160 kann eine isolierende Zwischenabdeckung 350 angeordnet sein. Diese Zwischenabdeckung kann beispielsweise Löcher aufweisen, die derart angeordnet sind, dass darunter positionierte Batteriezellen 160 z.B. durch jeweils einen Stecker kontaktiert werden können.

Des weiteren kann auf der ersten Lage 370 von nebeneinander platzierten Batteriezellen 160 eine Lage 380 oder auch mehrere Lagen von nebeneinander platzierten Batteriezellen angeordnet sein. Auch diese eine Lage 380 oder diese weiteren Lagen können in ihrem Bereich jeweils das Gehäuse komplett ausfüllen oder auch Freiräume lassen. So kann beispielsweise, wenn mindestens zwei Lagen von Batteriezellen übereinander angeordnet sind, jeweils zwei direkt angrenzende Lagen 370, 380 von nebeneinander platzierten Batteriezellen durch jeweils eine isolierende Zwischenabdeckung 350 getrennt werden. Die isolierende Zwischenabdeckung 350 kann beispielsweise einrastbar oder befestigbar an dem Gehäuse 305' angebracht werden. Die einzelnen Batteriezellen 160 können jeweils miteinander verbunden werden, und die Batteriemanagementeinrichtung 110 kann auch, wie zuvor beschrieben, mit den jeweiligen Batteriezellen 160 verbunden sein, um die zuvor beschriebenen Funktionen durchführen zu können.

Fig. 3b zeigt eine schematische Querschnittsdarstellung einer siebten beispielhaften Ausführungsform eines Batteriepacks. In dieser siebten beispielhaften Ausführungsform ist beispielhaft nur eine Lage von nebeneinander platzierten Batteriezellen 160 dargestellt, jedoch können auch, wie in Bezug auf Fig. 3a erläutert, mehrere von diesen Lagen übereinander angeordnet werden. Das Gehäuse 305' umfasst eine innen liegende Isolation 340, welche das Gehäuse 305' von den Batteriezellen 160 trennt. Des weiteren kann das Gehäuse 305' einen Schwingungsdämpfer 350 umfassen, welcher dazu eingerichtet ist, in diesem Gehäuse 305' angeordnete Batteriezellen 160 zu dämpfen. Dieser Schwingungsdämpfer 350 kann, wie in Fig. 3b exemplarisch dargestellt, am Boden des Gehäuses 305' angeordnet sein, so dass die Batteriezellen 160 auf dem Schwingungsdämpfer 390 platziert sind. Es können jedoch auch noch weitere Schwingungsdämpfer an den innen liegenden Seitenwänden des Gehäuses 305' angeordnet sein.

Des weiteren kann das Gehäuse 305' auch Dichtmittel 360 auf der Oberseite des Gehäuses 305' umfassen, die dazu eingerichtet sind, den Deckel 120 in verschlossenem Zustand gegenüber dem Gehäuse 305' abzudichten.

Auch wenn die in den Figuren 3a und 3b dargestellten Batteriezellen 160 senkrecht angeordnet sind, so kann auch mindestens eine der Batteriezellen 160 seitlich liegend angeordnet sein, wie zuvor erläutert. Darüberhinaus kann das Gehäuse 305' beispielsweise eine seitliche Öffnung aufweisen, wie in Bezug auf die in den Figuren 1e und 1f gezeigten Ausführungsbeispiele beschrieben wurde.

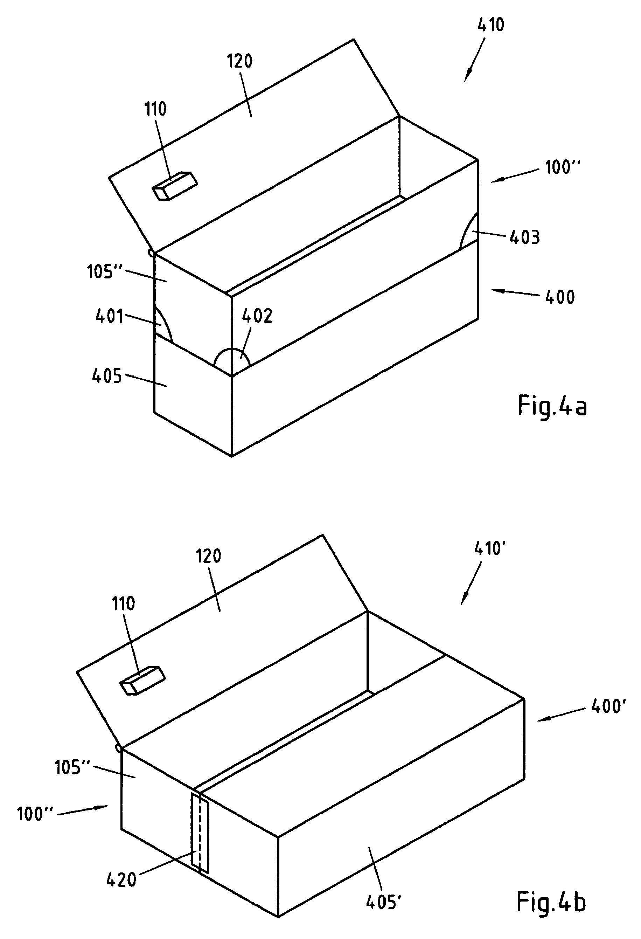

Fig. 4a zeigt eine schematische Querschnittsdarstellung einer achten beispielhaften Ausführungsform eines Batteriepacks 410.

Dieses Batteriepack 410 umfasst mindestens zwei Batteriemodule 100" und 400, wobei das Batteriemodul 400 derart ausgebildet ist, dass ein Gehäuse 105" des weiteren Batteriemoduls 100" auf dem Gehäuse 405 des Batteriemoduls 400 stapelbar ist. Hierzu kann das Batteriemodul 400 beispielsweise Aufnahmevorrichtungen 401, 402, 403 zur Aufnahme des Gehäuses 105" des weiteren Batteriemoduls 100" aufweisen. Somit können mehrere Batteriemodule 400, 100" übereinander angeordnet werden. Beispielsweise kann das oberste dieser übereinander angeordneten Batteriemodule 100", 400 eines der zuvor erläuterten Batteriemodule, welches einen Deckel umfasst, darstellen. So kann die Batteriemanagementeinrichtung 110 an dem Deckel angeordnet sein, wie zuvor erläutert, wobei diese Batteriemanagementeinrichtung 110 dazu eingerichtet sein kann, Batteriezellen in dem Gehäuse 105" des oben liegenden Batteriemoduls 100" zu überwachen bzw. zu steuern, aber auch beispielsweise Batteriezellen in den darunter liegenden Batteriemodulen, wie beispielsweise dem Batteriemodul 400 anzusteuern, zu überwachen. Hierzu kann eine Verkabelung vom Batteriemanagementgerät 110 zu den Batteriezellen in den jeweiligen Gehäusen 105", 405 der jeweiligen Batteriemodule 100", 400 angebracht werden.

Fig. 4b zeigt eine schematische Querschnittseinrichtung einer neunten beispielhaften Ausführungsform eines Batteriepacks 410'. Diese siebte beispielhafte Ausführungsform kann beispielsweise mit jeder der zuvor erläuterten anderen beispielhaften Ausführungsformen eines Batteriepacks kombiniert werden, insbesondere mit der in Fig. 4a dargestellten achten beispielhaften Ausführungsform eines Batteriepacks 410 bei der mindestens zwei Batteriemodule 100", 400 übereinander angeordnet sind.

In der in Fig. 4b dargestellten Anordnung ist das Gehäuse 105 des ersten Batteriemoduls 100" derart ausgebildet, dass ein Gehäuse 405' eines weiteren Batteriemoduls 400' neben dem Gehäuse 105" des ersten Batteriemoduls 100" angeordnet werden kann. Hierzu können beispielsweise Befestigungsmittel 420 verwendet werden, die die beiden Gehäuse 105", 405' der Batteriemodule 100" und 400' miteinander befestigt. Wie bereits im Bezug auf Fig. 4a erläutert, kann eine Batteriemanagementeinrichtung 110, die beispielsweise an dem Deckel 120 des ersten Batteriemoduls 100" angeordnet sein kann auch Batteriezellen des zweiten Batteriemoduls 400' mit ansteuern und/oder überwachen. Somit können mehrere Batteriemodule nebeneinander angeordnet werden und dabei untereinander befestigt werden, beispielsweise durch die Verbindungsmittel 420, es können jedoch auch hierzu mehrere Batteriemodule übereinander angeordnet werden, beispielsweise durch eine Kombination der in den Fig. 4a und 4b dargestellten Batteriemodule. Es kann beispielsweise nur eine einzige Batteriemanagementeinrichtung 110 für sämtliche Batteriemodule eines solchen Batteriepacks 410, 410' vorgesehen sein. Ein Batteriepack 410, 410' kann jedoch auch mehrere Batteriemanagementeinrichtungen 110 umfassen, die jeweils einem Batteriemodul zugeordnet sind, wobei auch hier nicht zwingendermaßen jedem Batteriemodul eine einzelne Batteriemanagementeinrichtung 110 zugeordnet sein muss.

Somit können mehrere Batteriemodule, je nach Bedarf, zu einem Batteriepack vereinigt werden, so dass entsprechend einer Anforderung, z.B. eines Flurförderzeuges, eine entsprechende Batterieanordnung in dem Batteriepack gewährleistet werden kann.

Jeder der zuvor beschriebenen Batteriedeckel 110 kann darüber hinaus auch einen Leistungsschalter aufweisen, der beispielsweise dazu eingerichtet ist, ein Ladekabel oder ein Verbraucherkabel von den jeweiligen Batteriezellen abzutrennen. Dieser Leistungsschalter kann beispielsweise ein Vakuumrelais sein, wie beispielsweise ein Czonka. Das Vakuumrelais kann beispielsweise eine galvanische Trennung bewirken. Dieser Leistungsschalter kann beispielsweise durch die jeweilige Batteriemanagementeinrichtung 110 angesteuert werden, wie beispielsweise bei Detektion eines nicht normgemäßen Zustandes wie z.B. Übertemperatur oder Kurzschluss oder einer sonstigen Fehlermeldung. Dieser Leistungsschalter kann beispielsweise auch auf der in Fig. 1e dargestellten Zwischenwand 180 angeordnet sein.

Sämtliche zuvor erläuterten Merkmale bezüglich der einzelnen Ausführungsformen lassen sich, soweit technisch möglich, miteinander kombinieren, d.h., dass diese Merkmale als einzelne Merkmale offenbart sind, und nicht zwingend in der Gesamtheit der in den jeweiligen Figuren dargestellten Zeichnungen zu betrachten sind.

## Patentansprüche

1. Batteriepack für Elektrofahrzeuge, insbesondere Flurförderzeuge, umfassend mindestens ein Batteriemodul (100, 100', 100'') mit jeweils einem zur Aufnahme einer Vielzahl von Batteriezellen (160) geeignetem Gehäuse (105, 105', 105''), wobei mindestens ein Batteriemodul (100, 100', 100'') jeweils eine Batteriemanagementeinrichtung (110) umfasst, welche dazu eingerichtet ist, eine Vielzahl von Batteriezellen (160) in zumindest einem Gehäuse (105, 105', 105") anzusteuern und/oder zu überwachen, und wobei mindestens ein Batteriemodul (105', 105'') einen Deckel (120, 220, 220') umfasst, welcher dazu eingerichtet ist, das Gehäuse (105', 105") des jeweiligen Batteriemoduls (100', 100'') zu verschließen, **dadurch gekennzeichnet, dass** eine der mindestens einen Batteriemanagementeinrichtung (110) an bzw. in dem Deckel (120, 220, 220') des jeweiligen Batteriemoduls (100, 100") derart angeordnet ist, dass die Batteriemanagementeinrichtung (110) bei verschlossenem Deckel (120, 220, 220') im Gehäuse (105', 105") des jeweiligen Batteriemoduls (100', 100'') platziert ist und dass die Batteriemanagementeinrichtung (110) aus dem Gehäuse (105', 105'') herausgebracht wird, wenn der Deckel (120, 220, 220') geöffnet wird.

2. Batteriepack nach Anspruch 1, **dadurch gekennzeichnet, dass** mindestens einer der Deckel (120, 220, 220') über Klappmittel (130) mit dem jeweiligen Gehäuse (105") verbunden ist.

3. Batteriepack nach einem der Ansprüche 1 bis 2, **dadurch gekennzeichnet, dass** eine Ladezustandsanzeige an bzw. in einem Deckel (120, 220, 220') eines Gehäuses (105', 105'') des mindestens einen Batteriemoduls (100', 100'') angeordnet ist.

4. Batteriepack nach Anspruch 3, **dadurch gekennzeichnet, dass** der Deckel (110, 220, 220') ein nach außen liegendes Sichtfenster umfasst, welches die Ladezustandsanzeige abdeckt.

5. Batteriepack nach einem der Ansprüche 1 bis 4, **dadurch gekennzeichnet, dass** ein Deckel (220, 220') eines Gehäuses (105', 105'') des mindestens einen Batteriemoduls (100', 100") mindestens einen der folgenden Anschlüsse aufweist:
- Ladekabelanschluß (222);
- Verbraucherkabelanschluß (221); und
- Datenübertragungsanschluß (225).

6. Batteriepack nach einem der Ansprüche 1 bis 5, **dadurch gekennzeichnet, dass** ein Ladegerät (230) auf einem Deckel (220') eines Gehäuses (105, 105') des mindestens einen Batteriemoduls (100', 100") angeordnet ist.

7. Batteriepack nach einem der vorangegangenen Ansprüche, **dadurch gekennzeichnet, dass** das Batteriepack (400) zumindest zwei Batteriemodule (100'', 400) umfasst, und dass zumindest ein Batteriemodul (400) Aufnahmevorrichtungen (401, 402, 403) zur Aufnahme des Gehäuses (105") eines weiteren Batteriemoduls aufweist, derart, dass das Gehäuse (105") des weiteren Batteriemoduls (100'') auf dem Gehäuse (405) eines des zumindest einen Batteriemoduls (400) stapelbar ist.

8. Batteriepack nach einem der vorangegangenen Ansprüche, **dadurch gekennzeichnet, dass** das Batteriepack (410) zumindest zwei Batteriemodule (100", 405') und Befestigungsmittel (420) umfasst, und wobei die Gehäuse (105'', 405'') von zumindest zwei Batteriemodulen (100", 405') derart ausgebildet sind, dass diese Gehäuse (105'', 405") nebeneinander angeordnet und mit den Befestigungsmitteln (420) miteinander befestigt werden können.

9. Batteriepack nach einem der vorgegangenen Ansprüche, **dadurch gekennzeichnet, dass** in dem Gehäuse (305') zumindest eines Batteriemoduls (300) jeweils mindestens eine Lage (370, 380) von nebeneinander platzierten Batteriezellen (160) angeordnet ist.

10. Batteriepack nach Anspruch 9, **dadurch gekennzeichnet, dass** jeweils eine isolierende Zwischenabdeckung (350) auf mindestens einer Lage (370) der mindestens einen Lage (370, 380) von nebeneinander platzierten Batteriezellen (160) angeordnet ist.

11. Batteriepack nach einem der Ansprüche 9 und 10, **dadurch gekennzeichnet, dass** die mindestens eine Lage (370, 380) von nebeneinander platzierten Batteriezellen (160) mindestens zwei übereinander angeordnete Lagen (370, 380) von nebeneinander platzierten Batteriezellen (160) darstellen.

12. Batteriepack nach einem der vorangegangenen Ansprüche, **dadurch gekennzeichnet, dass** das Gehäuse (305') zumindest eines Batteriemoduls (300') eine innenliegende Isolation (340) zur Isolierung des Gehäuses (305') gegenüber den in dem Gehäuse (305') angeordneten Batteriezellen (160) umfasst.

13. Batteriepack nach einem der vorangegangenen Ansprüche, **dadurch gekennzeichnet, dass** mindestes eine Batteriezelle (160) der mindestens einen Batteriezelle (160) seitlich liegend im Gehäuse (105, 105', 105'', 105''') angeordnet ist.

## Claims

1. Battery pack for electric vehicles, in particular industrial trucks, comprising at least one battery module (100, 100', 100"), with a respective housing (105, 105', 105") suitable for receiving a multitude of battery cells (160), wherein at least one battery module (100, 100', 100") comprises one battery management device (110) respectively, which is configured to control and/or monitor a plurality of battery cells (160) in at least one housing (105, 105', 105''), and in which at least one battery module (105', 105'') comprises a lid (120, 220, 220') which is configured to close the housing (105', 105'') of the respective battery module (100', 100''), **characterised in that** one of the at least one battery management devices (110) is arranged on or in the lid (120, 220, 220') in such a way that when the lid is closed the battery management device (110) is placed in the housing (105', 105'') of the respective battery module (100', 100'') and that the battery management device (110) is brought out of the housing (105', 105") when the lid (120, 220, 220') is opened.

2. Battery pack according to Claim 1, **characterised in that** at least one of the lids (120, 220, 220') is connected to the respective housing (105") by hinged means (130).

3. Battery pack according to any one of Claims 1 to 2, **characterised in that** a charging indicator is arranged on or in a lid (120, 220, 220') of the housing (105', 105'') of the at least one battery module (100', 100").

4. Battery pack according to Claim 3, **characterised in that** the lid (110, 220, 220') comprises an external viewing window which covers the charging indicator.

5. Battery pack according to any one of Claims 1 to 4, **characterised in that** a lid (220, 220') of a housing (105', 105") of the at least one battery module (100', 100") comprises at least one of the following connectors:
- Charging cable connector (222)
- Consumer cable connector (221)
- Data transfer connector (225)

6. Battery pack according to any one of Claims 1 to 5, **characterised in that** a charging device (230) is arranged on a lid (220') of a housing (105, 105') of the at least one battery module (100', 100").

7. Battery pack according to any one of the preceding claims, **characterised in that** the battery pack (400) comprises at least two battery modules (100'', 400), and that at least one battery module (400) features receiving devices (401, 402, 403) to receive the housing (105'') of another battery module (100'') in such a way that the housing (105") of the other battery module (100") is stackable on the housing (405) of the at least one battery module (400).

8. Battery pack according to any one of the preceding claims, **characterised in that** the battery pack (410) comprises at least two battery modules (100'', 405') and fixtures (420), and in which the housings (105'', 405") of at least two battery modules (100'', 405') are designed in such a way that these housings (105" , 405'') are adjacently-arranged and can be attached to each other with the fixtures (420).

9. Battery pack according to any one of the preceding claims, **characterised in that**, inside the housing (305'), at least one battery module (300) is respectively arranged at least one layer (370, 380) from adjacently-placed battery cells (160).

10. Battery pack according to Claim 9, **characterised in that** a respective insulating intermediate cover (350) is arranged on at least one layer (370) of the at least one layer (370, 380) of adjacently-placed battery cells (160).

11. Battery pack according to any one of Claims 9 and 10, **characterised in that** the at least one layer (370, 380) of adjacently-placed battery cells (160) represents at least two superposed layers (370, 380) of adjacently-placed battery cells (160).

12. Battery pack according to any one of the preceding claims, **characterised in that** the housing (305') of at least one battery module (300') includes inner insulation (340) to insulate the housing (305') with respect to the battery cells (160) arranged in the housing (305').

13. Battery pack according to any one of the preceding claims, **characterised in that** at least one battery cell (160) of the at least one battery cell (160) lies laterally arranged in the housing (105, 105', 105", 105"') .

## Revendications

1. Bloc de batteries pour véhicules automobiles électriques, en particulier pour véhicules de manutention, comprenant au moins un module de batteries (100, 100', 100") avec un boîtier (105, 105', 105") apte à recevoir une pluralité de cellules de batterie (160), sachant qu'au moins un module de batteries (100, 100', 100'') comprend au moins un dispositif de management de batteries (110), qui est conçu pour commander et / ou pour surveiller une pluralité de cellules de batterie (160), dans au moins un boîtier (105, 105', 105''), et sachant qu'au moins un boîtier (105', 105'') est doté d'un couvercle (120, 220, 220'), qui est destiné à fermer le boîtier (105', 105'') du module de batteries (100', 100'') respectif,
**caractérisé en ce que** l'un des dispositif de management de batteries (110) au moins prévu est agencé sur ou, respectivement, dans le couvercle (120, 220, 220') du module de batteries (100, 100'') respectif de telle manière que ledit dispositif de management de batteries (110) se trouve dans le boîtier (105', 105'') du module de batteries (100', 100'') respectif quand le couvercle (120, 220, 220') est fermé et que le dispositif de management de batteries (110) sorte du boîtier (105', 105'') quand le couvercle (120, 220, 220') est ouvert.

2. Bloc de batteries selon la revendication 1,
**caractérisé en ce que** l'un des couvercles (120, 220, 220'), au moins, est relié au boîtier (105") respectif par l'intermédiaire de moyens de rabattement (130).

3. Bloc de batteries selon l'une des revendications 1 à 2,
**caractérisé en ce qu'**un indicateur d'état de charge est disposé sur ou dans le couvercle (120, 220, 220') d'au moins un boîtier (105', 105") du module de batteries (100', 100") au moins prévu.

4. Bloc de batteries selon la revendication 3,
**caractérisé en ce que** le couvercle (120, 220, 220') est doté d'une fenêtre d'inspection, située vers l'extérieur, qui recouvre l'indicateur d'état de charge.

5. Bloc de batteries selon l'une des revendications 1 à 4,
**caractérisé en ce que** le couvercle (220, 220') d'un boîtier (105', 105'') du module de batteries (100', 100'') au moins prévu est doté d'au moins l'un des raccords suivants :
- raccord de câble de charge (222)
- raccord de câble utilisateur (221) et
- raccord de transmission de données (225).

6. Bloc de batteries selon l'une des revendications 1 à 5,
**caractérisé en ce qu'**un appareil de charge (230) est disposé sur le couvercle (220') d'un boîtier (105, 105') du module de batteries (100', 100") au moins prévu.

7. Bloc de batteries selon l'une des revendications précédentes
**caractérisé en ce que** le bloc de batteries (400) comprend au moins deux modules de batteries (100'', 400) et qu'au moins un module de batteries (400) est doté de dispositifs de réception (401, 402, 403), destinés à recevoir le boîtier (105'') d'un autre module de batteries de telle manière que le boîtier (105") de l'autre module de batteries (100") puisse être empilé sur le boîtier (405) d'au moins un module de batteries (400).

8. Bloc de batteries selon l'une des revendications précédentes,
**caractérisé en ce que** le bloc de batteries (410) comprend au moins deux modules de batteries (100", 405') et des moyens de fixation (420), et sachant que les boîtiers (105'', 405") d'au moins deux modules de batteries (100", 405") sont formés de telle manière que ces boîtiers (105", 405'') puissent être disposés l'un à côté de l'autre et fixés ensemble avec les moyens de fixation (420).

9. Bloc de batteries selon l'une des revendications précédentes,
**caractérisé en ce que**, dans le boîtier (305') d'au moins un module de batteries (300), est disposée au moins une couche (370, 380) de cellules de batterie (160) placée les unes à côté des autres.

10. Bloc de batteries selon la revendication 9,
**caractérisé en ce que**, chaque fois, un recouvrement intermédiaire isolant (350) est disposé sur au moins une couche (370) de la couche (370, 380) au moins prévue de cellules de batterie (160) disposées les unes à côté des autres.

11. Bloc de batteries selon l'une des revendications 9 et 10,
**caractérisé en ce que** la couche (370, 380) au moins prévue de cellules de batterie (160), disposées les unes à côté des autres représente au moins deux couches (370, 380), disposées l'une au-dessus de l'autre, de cellules de batterie (160) disposées les unes à côté des autres.

12. Bloc de batteries selon l'une des revendications précédentes,
**caractérisé en ce que** le boîtier (305') d'au moins un module de batteries (300') comprend une isolation (340) pour isoler le boîtier (305') par rapport aux cellules de batterie (160) disposées dans ledit boîtier (305').

13. Bloc de batteries selon l'une des revendications précédentes,
**caractérisé en ce que**, au moins, une cellule de batterie (160) de la cellule de batterie (160) au moins prévue est disposée, couchée sur le côté, dans le boîtier (105, 105', 105'', 105"').
